# EUROPÄISCHE PATENTSCHRIFT

(11) **EP 0 837 253 B1**
(45) Veröffentlichungstag und Bekanntmachung des Hinweises auf die Patenterteilung: **11.08.1999**
(21) Anmeldenummer: 97115668.2
(22) Anmeldetag: 10.09.1997
(51) Int. Cl.: F16B 7/04, F16B 5/00, F16B 7/18, F16B 12/32, E04B 1/61

(54) **Verbindungseinrichtung für Profilteile**
Connecting arrangement for profiles
Dispositif de raccordement pour éléments profilés

(30) Priorität: 18.10.1996 DE 29618079 U
(43) Veröffentlichungstag der Anmeldung: 22.04.1998
(73) Patentinhaber: Festo AG & Co, 73734 Esslingen (DE)
(72) Erfinder: Stoll, Kurt, Dr., 73732 Esslingen (DE); Kerscher, Wolf-Dieter, 73230 Kirchheim (DE)
(74) Vertreter: Abel, Martin, Dipl.-Ing.

(56) Entgegenhaltungen:
- DE-A- 3 829 998
- DE-A- 4 131 903
- DE-U- 9 012 607

## Beschreibung

Die Erfindung betrifft eine Verbindungseinrichtung zum Verbinden zweier Profilteile, die jeweils mindestens eine Verankerungsnut mit einer zu einer Anlagefläche hin offenen Nutöffnung und einen sich an die Nutöffnung anschließenden breiteren Verankerungsabschnitt mit wenigstens einer zum Nutgrund weisenden Abstützfläche aufweisen und die mit einander zugewandten Anlageflächen derart aneinandergesetzt sind, daß sich wenigstens zwei Verankerungsnuten mit ihren Nutöffnungen gegenüber liegen. Eine solche Verbindungseinrichtung ist aus DE-U-9 012 607 bekannt.

Beim Aufbau beliebiger Konstruktionen wie z.B. von Gestellen, Tischen oder Regalen finden zunehmend mit Verankerungsnuten versehene Profilteile Verwendung. Derartige Profilteile sind in vielfältiger Ausgestaltung verfügbar und haben meist stangen- oder plattenförmige Gestalt, wobei sie am Außenumfang über eine Mehrzahl sich linear erstreckender und parallel zueinander verlaufender Verankerungsnuten aufweisen. Die Verankerungsnuten sind verwendbar, um Profilteile untereinander zu fixieren oder um sonstige Bauteile und Einrichtungen, beispielsweise Maschinenteile, zu befestigen.

Nicht selten ergibt sich das Erfordernis, zwei Profilteile längsseits miteinander zu verbinden, so daß ihre Verankerungsnuten parallel zueinander verlaufen. Für eine derartige Verbindung wurde in dem deutschen Gebrauchsmuster G 92 00 645.0 bereits eine Verbindungseinrichtung vorgeschlagen, bei der die zu verbindenden Profilteile derart längsseits aneinandergesetzt werden, daß sich wenigstens zwei ihrer Verankerungsnuten mit ihren den Nuthals bildenden Nutöffnungen gegenüberliegen. Die Verbindungseinrichtung verfügt über ein winkelförmiges Verbindungselement, das mit der Stirnseite des einen Profilteiles verschraubt und gleichzeitig, unter Verwendung eines Nutensteines, in der Verankerungsnut des anderen Profilteiles verankert wird. Zwar läßt sich hierbei eine feste Verbindung erzielen, jedoch eignet sich die Verbindungseinrichtung nur zum Verbinden unterschiedlich langer Profilteile. Außerdem muß das eine der Profilteile zwingend in einer Weise ausgebildet sein, daß das Einschneiden eines Gewindes möglich ist. Zudem sitzt die Verbindungseinrichtung außen an den Profilteilen und ist somit in vielen Fällen hinderlich.

Es ist daher die Aufgabe der vorliegenden Erfindung, eine Verbindungseinrichtung der Eingangs genannten Art zu schaffen, die, ohne hinderlich zu sein und ohne besondere Vorbereitungsarbeiten an den Profilteilen durchführen zu müssen, eine einfache und sichere Verbindung ermöglicht.

Diese Aufgabe wird dadurch gelöst, daß die Verbindungseinrichtung als vollständig in dem von den beiden sich gegenüberliegenden Verankerungsnuten gemeinsam begrenzten Nutenraum positionierbaren Spannelement ausgebildet ist, das über zwei in Längsrichtung beabstandete und über eine Beaufschlagungseinrichtung verbundene Übertragungskörper verfügt, die jeweils unter Durchquerung der fluchtenden Nutenöffnungen gleichzeitig in die Verankerungsabschnitte beider Verankerungsnuten eingreifen, wobei zwischen den beiden Übertragungskörpern zwei jeweils in einen der Verankerungsabschnitte eingreifende, in Querrichtung bewegbare Spannkörper angeordnet sind, die jeweils über derart gestaltete Kraftumlenkungsflächen mit den Übertragungskörpern zusammenwirken, daß sie bei durch die Beaufschlagungseinrichtung im Sinne einer gegenseitigen Annäherung erfolgender Beaufschlagung der Übertragungskörper gegen die Abstützfläche des zugeordneten Verankerungsabschnittes vorgespannt werden und zwischen ihnen liegende, eine jeweilige Nutöffnung längsseits flankierende Profilteilabschnitte der beiden Profilteile zusammenspannen.

Somit ist die Verbindungseinrichtung von einem Spannelement gebildet, das in seiner Gebrauchsposition vollständig in dem Nutenraum untergebracht werden kann, der von den beiden nebeneinander liegenden Verankerungsnuten der zu verbindenden Profilteile definiert wird. Die Außenfläche der Profilteile bleibt daher unbeeinträchtigt und ist zur Bestückung mit etwaigen anderen Bauteilen oder zur Befestigung weiterer Profilteile uneingeschränkt nutzbar. Bei Bedarf kann innerhalb des Nutenraumes eine beliebige Anzahl von Spannelementen vorgesehen werden, wobei der Spannvorgang durch ein entsprechend ausgebildetes Betätigungswerkzeug über die Stirnseite der Verankerungsnuten hinweg problemlos durchgeführt werden kann. Eine spanende Vorbearbeitung der Profilteile ist nicht erforderlich, es bedarf insbesondere keiner Einbringung störender Bohrungen oder sonstiger spanender Bearbeitungen. Das Spannelement arbeitet ähnlich einem Schraubstock, indem es die eine jeweilige Nutöffnung längsseits flankierenden Profilteilabschnitte der beiden Profilteile zwischen den Spannkörpern einspannt, die von der Beaufschlagungseinrichtung, unter Vermittlung der Übertragungskörper, in Querrichtung der jeweiligen Verankerungsnut aufeinanderzu gerichtet beaufschlagbar sind. Die Übertragungskörper werden durch die Beaufschlagungseinrichtung axial zusammengezogen, wobei sie unter Vermittlung der Kraftumlenkungsflächen derart auf die Spannkörper einwirken, daß diese innerhalb der Verankerungsabschnitte in Richtung zu den Abstützflächen verlagert werden. Insgesamt ergibt sich eine gleichmäßige Einleitung der Spannkraft auf die Profilteile, so daß ein sicherer Halt gewährleistet ist. Bei entsprechender Ausgestaltung der Beaufschlagungseinrichtung kann das Spannelement bei Bedarf wieder entfernt werden, ohne daß an den Profilteilen nennenswerte Beschädigungen entstanden wären.

Das Spannelement läßt sich insbesondere auch dazu verwenden, um plattenartige Profilteile, sogenannte Profilplatten, zum Zwecke der Verbreiterung der Plattenfläche miteinander zu verbinden. Auch können stabartige Profilteile, sogenannte Profilstäbe, sehr einfach in Längsrichtung auf einer Profilplatte festgelegt werden. In gleicher Weise ist ein längsparalles Verbinden von Profilstäben möglich.

Vorteilhafte Weiterbildungen der Erfindung sind in den Unteransprüchen aufgeführt.

Zweckmäßigerweise sind die Spannkörper und die Übertragungskörper im Bereich ihrer zusammenwirkenden Kraftumlenkungsflächen derart ausgebildet, daß sie zur Kraftumlenkung aneinander abgleiten können. Die Kraftumlenkungsflächen sind insbesondere von Schrägflächen gebildet.

Als besonders vorteilhaft erweist sich eine Ausgestaltung, bei der an den Spannkörpern und an den Übertragungskörpern komplementäre Kraftumlenkungsflächen vorgesehen sind, die in Querrichtung der zugeordneten Verankerungsnut zu deren Nutöffnung hin divergieren. Als Beaufschlagungseinrichtung ist zweckmäßigerweise wenigstens ein zugankerartiges Beaufschlagungselement vorgesehen, das sich zwischen den beiden Übertragungskörpern erstreckt und sich an diesen abstützt. Eine besonders gleichmäßige Krafteinleitung ergibt sich dabei, wenn zwei zugankerartige Beaufschlagungselemente vorgesehen sind, die jweils an den in Gebrauchsposition des Spannelementes innerhalb eines jeweiligen Verankerungsabschnittes liegenden Übertragungspartien der Übertragungskörper angreifen. Aufgrund der regelmäßig größeren Querschnittsfläche der Verankerungsabschnitte gestattet dies zudem die Verwendung von großdimensionierten Beaufschlagungselementen, mit denen sich entsprechend hohe Beaufschlagungskräfte übertragen lassen.

Sind an den Spannkörpern in Längsrichtung verlaufende Zentriervorsprünge vorgesehen, die von innen her in die Nutöffnung eingreifen und mit den Flanken der Nutöffnung zusammenarbeiten, ist sichergestellt, daß die Spannkörper stets in der gewünschten Lage an den Profilteilen angreifen.

Die sich zwischen den beiden Verankerungsnuten erstreckenden Übertragungskörper verfügen zweckmäßigerweise über einen die Nutöffnungen durchsetzenden Verbindungssteg, dessen Breite der Breite der jeweiligen Nutöffnung entspricht. Dadurch erfolgt eine zusätzliche formschlüssige Fixierung der aneinander angesetzten Profilteile in der Ebene der Anlageflächen rechtwinkelig zu den Nutlängsrichtungen.

Die beiden Übertragungskörper, wie im übrigen auch ein jeweiliger Spannkörper, sind zweckmäßigerweise jeweils als einstückige Bauteile ausgeführt und bestehen insbesondere aus Stahl oder aus einer Aluminium-Legierung.

Nachfolgend wird die Erfindung anhand der beiliegenden Zeichnung näher erläutert. In dieser zeigen:
- Figur 1: zwei längsseits aneinandergesetzte und miteinander zu verbindende Profilteile in perspektivischer Teil-Darstellung, zusammen mit zwei Verbindungseinrichtungen der erfindungsgemäßen Art, die sich noch außerhalb der Verankerungsnuten befinden,
- Figur 2: einen Längsschnitt durch die Anordnung aus Figur 1 im Bereich einer in Gebrauchsposition befindlichen, in die Verankerungsnuten eingeführten Verbindungseinrichtung,
- Figur 3: einen Teilquerschnitt durch die Anordnung aus Figur 2 gemäß Schnittlinie III-III, und
- Figur 4: die beispielsgemäße Verbindungseinrichtung in Einzel-Darstellung und in ihre einzelne Bestandteile zerlegt.

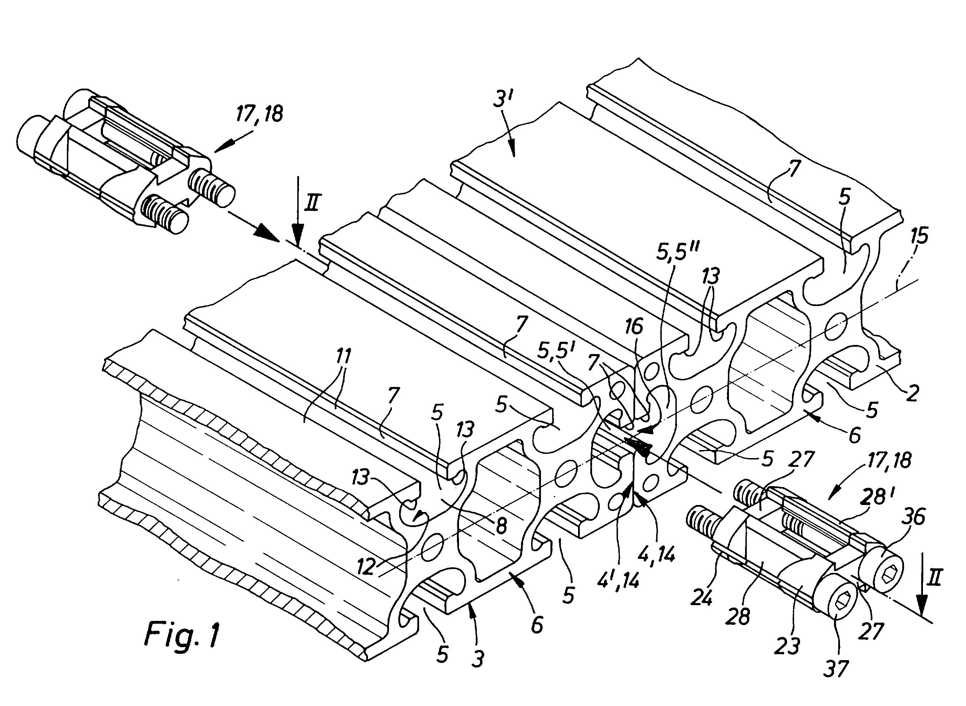

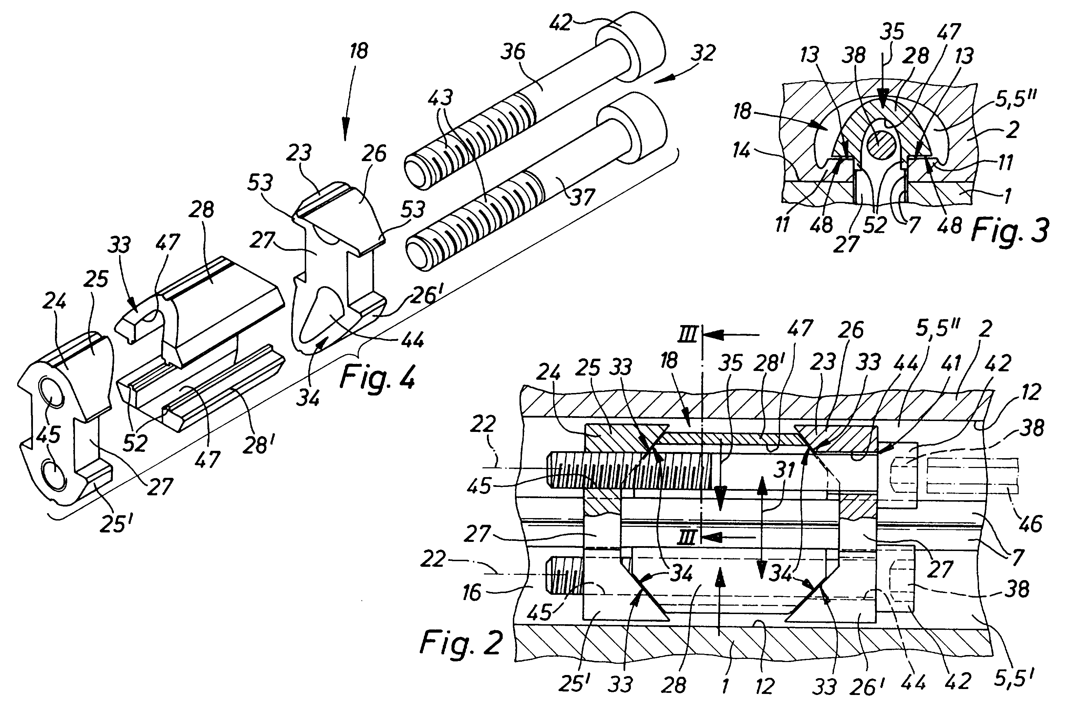

In den Figuren 1 und 2 sind in Teildarstellung zwei plattenartige Profilteile 1, 2 abgebildet, die zweckmäßigerweise als Strangpressteile ausgebildet sind und insbesondere aus Aluminiummaterial bestehen. Sie verfügen über einen rechteckförmigen Querschnitt, der von vier Außenflächen in Gestalt zweier einander entgegengesetzter großflächiger Plattenflächen 3, 3' und zweier ebenfalls einander entgegengesetzter schmaler Seitenflächen 4, 4' definiert ist. Vorzugsweise in jeder dieser Außenflächen 3, 3', 4, 4' ist mindestens eine Verankerungsnut 5 ausgebildet, die sich über die gesamte Länge des jeweiligen Profilteiles 1, 2 erstreckt und jeweils zu beiden Stirnflächen 6 des betreffenden Profilteiles 1, 2 offen ist. Über eine schlitzartige Nutöffnung 7 öffnet sich eine jeweilige Verankerungsnut 1, 2 zudem zur jeweils zugeordneten Außenfläche 3, 3', 4, 4' des Profilteiles 1, 2.

Entsprechend ihrer Dimensionierung verfügen die beispielsgemäßen Profilteile 1, 2 an ihren großflächigen Plattenflächen 3, 3' über eine Mehrzahl längsverlaufender und zueinander paralleler Verankerungsnuten 5. Eine jeweilige schmale Seitenfläche 4, 4' ist beispielsgemäß nur mit einer Verankerungsnut 5 versehen.

Alle Verankerungsnuten 5 der beispielsgemäßen Profilteile 1, 2 verfügen untereinander über zweckmäßigerweise die gleiche Querschnittsform. Sie haben jeweils einen sich an die zugeordnete Außenfläche anschließenden Nuthals, der die erwähnte Nutöffnung 7 bildet. An die Nutöffnung 7 schließt sich in Tiefenrichtung der betreffenden Verankerungsnut 5 ein im Vergleich zur Nutöffnung 7 breiterer Verankerungsabschnitt 8 an. Somit ergibt sich beispielsgemäß eine Art T-Nut, wobei die seitlich neben der Nutöffnung 7 liegenden und dem Nutgrund 12 zugewandten Flächenabschnitte des Verankerungsabschnittes 8 Abstützflächen 13 bilden, die sich über die gesamte Nutlänge erstrecken. Die Abstützflächen 13 befinden sich an leistenartigen Profilteilabschnitten 11, die eine jeweilige Nutöffnung 7 längsseits flankieren.

Die beispielsgemäß zu verbindenden Profilteile 1, 2 sind mit zweien ihrer schmalen Seitenflächen 4, 4' aneinander gestoßen. Die betreffenden Seitenflächen 4, 4' bilden hierbei Anlagenflächen 14, die insbesondere unmittelbar aneinander anliegen. Die in den betreffenden Seitenflächen 4, 4' ausgebildeten Verankerungsnuten 5, 5'; 5, 5" verlaufen hierbei parallel zueinander und liegen sich mit ihren Nutöffnungen 7 in der Ausdehnungsebene 15 der Profilteile 1, 2 gegenüber, welche mithin fluchtend zueinander angeordnet sind. Die betreffenden Verankerungsnuten 5', 5'' begrenzen somit gemeinsam einen von der Innenfläche beider Verankerungsnuten 5, 5' definierten Nutenraum 16.

Zur Verbindung der beiden Profilteile 1, 2 sind beispielsgemäß zwei identisch aufgebaute Verbindungseinrichtungen 17 vorgesehen, die in Figur 1 aus verschiedenen Blickrichtungen dargestellt sind. Grundsätzlich würde bereits eine dieser Verbindungseinrichtungen 17 zum Verbinden der Profilteile 1, 2 ausreichen. Die Anzahl der verwendeten Verbindungseinrichtungen 17 hängt insbesondere von der Baulänge der zu verbindenden Profilteile ab.

Die Verbindungseinrichtung 17 ist als Spannelement 18 ausgebildet, das aus mehreren Einzelteilen besteht, die vor Gebrauch zusammengesetzt werden. Das Spannelement 18 ist somit ein als Einheit handhabbares mehrteiliges Element, das sich leicht handhaben läßt.

Zum Verbinden der Profilteile 1, 2 wird das Spannelement 18, nachdem die Profilteile 1, 2 mit ihren Anlageflächen 14 aneinandergesetzt sind, von einer der Stirnflächen 6 her in den gemeinsamen Nutenraum 16 bis zu einer gewünschten Stelle eingeschoben. Von Vorteil ist dabei, daß sich das Spannelement 18 soweit axial innerhalb des Nutenraumes 16 positionieren läßt, daß es vollständig in diesem Nutenraum 16 aufgenommen ist und stirnseitig nicht über die Verankerungsnuten 5', 5'' hinaussteht. Das Spannelement 18 ist somit von außen nicht sichtbar und beeinträchtigen in keiner Weise die Nutzbarkeit der Außenflächen der zusammengefügten Profilteile.

Aus Figuren 2 und 3 geht eine Gebrauchsposition eines der in den Nutenraum 16 eingeschobenen Spannelemente 18 hervor. Man erkennt, daß das Spannelement 18 über zwei in Längsrichtung 22 der Verankerungsnuten 5', 5,'' mit Abstand zueinander angeordnete und vorzugsweise jeweils einstückig ausgebildete Übertragungskörper 23, 24 verfügt. Jeder Übertragungskörper 23, 24 ist so angeordnet, daß er die beiden fluchtenden Nutöffnungen 7 durchsetzt und mit jeweils einer Übertragungspartie 25, 25'; 26, 26' in den Verankerungsabschnitt 8 einer jeweiligen Verankerungsnut 5', 5" hineinragt. Die Übertragungspartien 25, 25'; 26, 26' eines jeweiligen Übertragungskörpers 23, 24 sind über einen Verbindungssteg 27 starr miteinander verbunden, dessen quer zur Nutlängsrichtung 22 gemessene Breite im wesentlichen der Breite der von ihm durchsetzten Nutöffnungen 7 entspricht. Da die Verbindungsstege 27 axial beabstandet sind, ergibt sich somit bereits eine formschlüssige Vorfixierung der zu verbindenden Profilteile 1, 2 in der Ebene der Anlageflächen 14 rechtwinkelig zu der Ausdehnungsebene 15.

Zwischen den beiden Übertragungskörpern 23, 24 sind zwei sich in Längsrichtung 22 erstreckende Spannkörper 28, 28' angeordnet. Jeweils ein Spannkörper 28, 28' ist den beiden in einen gemeinsamen Verankerungsabschnitt 8 eingreifenden Übertragungspartien 25, 26; 25', 26' zugeordnet, so daß in jedem Verankerungsabschnitt 8 einer der Spannkörper 28, 28' zu liegen kommt.

Die beiden Übertragungskörper 23, 24 sind durch eine Beaufschlagungseinrichtung 32 miteinander verbunden. Durch diese Beaufschlagungseinrichtung 32 können die beiden Übertragungskörper 23, 24 im Sinne einer gegenseitigen axialen Annäherung beaufschlagt werden. Infolge einer derartigen Beaufschlagung wirken die Übertragungskörper 23, 24 mit an ihren Übertragungspartien 25, 25'; 26, 26' vorgesehenen zweiten Kraftumlenkungsflächen 34 auf zugewandte erste Kraftumlenkungsflächen 33 eines jeweiligen Spannkörpers 28, 28' ein. Durch entsprechende Gestaltung der Kraftumlenkungsflächen 33, 34 wird die axiale Beaufschlagungskraft der Beaufschlagungseinrichtung 32 in eine rechtwinkelig hierzu gerichtete Querkraft 35 umgesetzt, mit der ein jeweiliger Spannkörper 28, 28' gegen die oben beschriebenen Abstützflächen 13 einer jeweiligen Verankerungsnut 5', 5'' gespannt wird. Auf diese Weise werden die die Abstützflächen 13 aufweisenden Profilteilabschnitte 11 der beiden Profilteile 1, 2 von den gegeneinander gespannten Spannkörpern 28, 28' im Bereich der Anlagefläche 14 lösbar fest zusammengespannt. Zum Lösen der Verbindung genügt es, die Beaufschlagungseinrichtung 32 zu lösen, so daß die Übertragungskörper 23, 24 ihre Umklammerung bezüglich der Spannkörper 28, 28' lösen, wodurch die als Spannkraft wirksame Querkraft 35 entfällt und das Spannelement 18 aus dem Nutenraum 16 entfernt werden kann.

Beim Ausführungsbeispiel verfügt ein jeweiliger Spannkörper 28, 28' im Bereich seiner einander entgegengesetzten axialen Stirnseiten über jeweils eine erste Kraftumlenkungsfläche 33. Es handelt sich jeweils bevorzugt um eine ebene Schrägfläche, wobei ihre Ausrichtung so gewählt ist, daß sie in Querrichtung 31 der zugeordneten Verankerungsnut zu deren Nutöffnung 7 hin auseinanderlaufen. Je weiter sich die Flächen vom Nutgrund 12 zur Nutöffnung 7 hin entfernen, desto größer wird ihr in Längsrichtung 22 gemessener Abstand.

Jeder dieser ersten Kraftumlenkungsflächen 33 ist eine an der benachbarten Übertragungspartie 25, 25'; 26, 26' vorgesehene zweite Kraftumlenkungsfläche 34 zugewandt. Ein jeweiliges Paar von einander zugeordneten ersten und zweiten Kraftumlenkungsflächen 33, 34 liegt zumindest bei betätigter Beaufschlagungseinrichtung 32 aneinander an. Der Verlauf der zweiten Kraftumlenkungsflächen 34 entspricht demjenigen der ersten Kraftumlenkungsflächen 33, so daß die an in einer gemeinsamen Verankerungsnut 5', 5" befindlichen Übertragungspartien 25, 26; 25', 26' vorgesehenen zweiten Kraftumlenkungsflächen 34 einander axial zugewandt sind und in Querrichtung 31 divergieren. Die Neigungswinkel der Kraftumlenkungsflächen 33, 34 bezüglich der Längsachsen 22 betragen beispielsgemäß in etwa 45°. Ist die Beaufschlagungseinrichtung 32 gelockert, so sitzen die Spannkörper 28, 28' mit Spiel zwischen den Übertragungskörpern 23, 24 und das Spannelement 18 kann in dem Nutenraum 16 axial verlagert werden. Durch Aktivieren der Beaufschlagungseinrichtung 32 werden die Übertragungskörper 23, 24 gegeneinandergezogen, so daß die Spannkörper 28, 28' mit ihren geneigten ersten Kraftumlenkungsflächen 33 an den mit einem entsprechenden Schrägverlauf versehenen zweiten Kraftumlenkungsflächen 34 der Übertragungskörper 23, 24 abgleiten und in Querrichtung 31 aufeinanderzu bewegt werden, wobei sie die Abstützflächen 13 klemmend beaufschlagen.

Die beispielsgemäße Beaufschlagungseinrichtung 32 hat eine zugankerähnliche Wirkung, indem sie bei Betätigung die beiden Übertragungskörper 23,24 zueinanderzieht. Sie umfaßt beispielsgemäß zwei einzelne Beaufschlagungselemente 36, 37, die sich innerhalb einer jeweiligen Verankerungsnut 5', 5" in Längsrichtung 22 erstrecken und jeweils die beiden Übertragungskörper 23,24 miteinander verbinden. Ein jeweiliges Beaufschlagungselement 36, 37 ist vorzugsweise als Schraube ausgebildet, die einen mit einem Innenmehrkant 38 versehenen Schraubenkopf 42 und einen sich an diesen anschließenden Gewindeschaft 43 aufweist. Einer der Übertragungskörper 23,24 verfügt im Bereich seiner beiden Übertragungspartien 26, 26' über eine in Längsrichtung 22 verlaufende bohrungsartige gewindelose Durchbrechung 44. Hierzu koaxial ausgerichtet ist die gegenüberliegende Übertragungspartie 25, 25' des anderen Übertragungskörpers 24 mit einer vorzugsweise ebenfalls durchgehenden Gewindebohrung 45 versehen. Die beiden Beaufschlagungselemente 36, 37 sind nun durch die Durchbrechungen 44 hindurchgesteckt und mit ihren Gewindeschäften 43 in die koaxial gegenüberliegenden Gewindebohrungen 45 eingeschraubt, wobei sie sich mit ihrem Schraubenkopf 42 an der dem Spannkörper 28, 28' axial entgegengesetzten Außenfläche 41 des die Durchbrechungen 44 aufweisenden Übertragungskörpers 23 abstützen. Durch Festziehen der beiden Beaufschlagungselemente 36, 37 werden somit die Übertragungskörper 23, 24 aneinander angenähert, so daß sich die oben erläuterte Spannwirkung ergibt. Da jedem Spannkörper 28, 28' ein eigenes Beaufschlagungselement 36, 37 zugeordnet ist, läßt sich die Spannkraft bei einfachem Aufbau des Spannelementes 18 besonders gut dosieren.

Die Betätigung der Beaufschlagungselemente 36, 37 erfolgt zweckmäßigerweise durch ein geeignetes Werkzeug 46, vorliegend ein Schraubwerkzeug, das entsprechend der in Figur 2 angedeuteten Weise durch die stirnseitigen Öffnungen der Verankerungsnuten 5 hindurch axial in die Verankerungsnuten einführbar ist. Hat das Werkzeug 26 eine ausreichende Länge, kann das Spannelement 18 ohne weiteres sehr tief versenkt in dem Nutenraum 16 angeordnet werden.

Es wäre denkbar, anstelle der beiden Beaufschlagungselemente 36, 37 lediglich ein, insbesondere zentral angeordnetes, Beaufschlagungselement vorzusehen. Die Doppelanordnung hat allerdings den Vorteil, daß die Beaufschlagungslemente 36, 37 in den Bereich der Verankerungsabschnitte 8 gelegt werden können, wo sie die Übertragungskörper 23, 24 und die Spannkörper 28, 28' unmittelbar im Bereich der Kraftumlenkungsflächen 33, 34 beaufschlagen können. Außerdem steht im Bereich der Verankerungsabschnitte 8 ein größerer Aufnahmequerschnitt zur Verfügung, so daß größer dimensionierte Beaufschlagungselemente 36, 37 verwendbar sind.

Um die Beaufschlagungselemente 36, 37 in der geschilderten Weise anordnen zu können, sind die Durchbrechungen 44 und Gewindebohrungen 45 so plaziert, daß sie zu den zweiten Kraftumlenkungsflächen 34 ausmünden. Daraus resultiert der aus Figur 4 ersichtliche bogenförmige Verlauf der erwähnten Flächen um die Mündungen der Durchbrechungen 44 bzw. Gewindebohrungen 45 herum.

Desweiteren werden auch die Spannkörper 28, 28' vom jeweils zugeordneten Beaufschlagungselement 36, 37 in Längsrichtung 22 durchsetzt. Um einem jeweiligen Spannkörper 28, 28' ein zur Durchführung des Spannvorganges ausreichendes Querbewegungsspiel zu gewährleisten, sind die Spannkörper 28, 28' beispielsgemäß nicht mit ringsum geschlossenen Bohrungen versehen, sondern verfügen an der der Nutöffnung 7 zugewandten Spannseite über eine zu der Nutöffnung 7 hin offene nutartige Vertiefung 47, die stirnseitig an den beiden ersten Kraftumlenkungsflächen 33 ausmündet. Auf diese Weise hat ein jeweiliger Spannkörper 28, 28' eine U-ähnliche Querschnittsgestalt, wobei die ersten Kraftumlenkungsflächen 33 einen sich um die stirnseitige Ausmündung der Vertiefung 47 erstreckenden bogenförmigen Verlauf haben.

Ein jeweiliger Spannkörper 28, 28' ist reiterähnlich auf das zugeordnete Beaufschlagungselement 36, 37 aufgesetzt und wird dort von den Übertragungspartien 25, 25'; 26, 26' gehalten, von denen sie aufgrund des geneigten Verlaufes der Kraftumlenkungsflächen 33, 34 auf der der Nutöffnung 7 entgegengesetzten Längsseite ein Stück weit übergriffen werden. Dadurch sind die Spannkörper 28, 28' auch bei aus dem Nutenraum 16 entferntem Spannelement 18 verliersicher gehalten.

Die Beaufschlagung der profilteilseitigen Abstützflächen 13 erfolgt beispielsgemäß über entsprechend orientierte Spannflächen 48, die an den die nutartige Vertiefung 47 flankierenden Randabschnitten der rinnenförmigen Spannkörper 28, 28' vorgesehen sind.

Vorzugsweise befindet sich an den vorerwähnten Randabschnitten der Spannkörper 28, 28' unmittelbar neben der zugeordneten Spannfläche 48 jeweils ein in Längsrichtung verlaufender, beispielsgemäß rippenartig ausgebildeter Zentriervorsprung 52. Die Anordnung der Zentriervorsprünge 52 ist so getroffen, daß sie bei an den Abstützflächen 13 anliegenden Spannflächen 48 in die zugeordnete Nutöffnung 7 eintauchen und jeweils unmittelbar neben der zugeordneten Flanke der Nutöffnung 7 zu liegen kommen. Dadurch ist ein optimaler Sitz der Spannkörper 28, 28' gewährleistet.

Insbesondere um die Stabilität des Spannelementes 18 zu erhöhen, kann ein jeweiliger Übertragungskörper 23, 24 wie abgebildet an seinen in den Verankerungsabschnitten 8 liegenden Übertragungspartien 25, 25'; 26, 26' über seitliche Stützvorsprünge 53 verfügen, die vergleichbar den Spannflächen 48 die Abstützflächen 13 innerhalb der Verankerungsabschnitte 8 übergreifen. Bei einer entsprechenden Ausgestaltung besitzen die Übertragungspartien 25, 25'; 26, 26' eine größere Breite als der jeweils zugeordnete Verbindungssteg 27.

Die Spannkörper 28, 28' sowie die Übertragungspartien 25, 25'; 26, 26' können jeweils im wesentlichen die Querschnittsgestalt eines Nutensteines besitzen und sind zweckmäßigerweise, zumindest weitestgehend, an die Innenkontur der Verankerungsabschnitte 8 angepaßt. Beispielsgemäß ergibt sich somit auf der der Nutöffnung 7 entgegengesetzten Seite jeweils eine abgerundete Formgebung für die Spannelemente 18 und die Übertragungspartien 25, 25'; 26, 26'.

## Patentansprüche

1. Verbindungseinrichtung zum Verbinden zweier Profilteile (1, 2), die jeweils mindestens eine Verankerungsnut (5, 5', 5'') mit einer zu einer Anlagefläche (14) hin offenen Nutöffnung (7) und einen sich an die Nutöffnung (7) anschließenden breiteren Verankerungsabschnitt (8) mit wenigstens einer zum Nutgrund (12) weisenden Abstützfläche (13) aufweisen und die mit einander zugewandten Anlageflächen (14) derart aneinandergesetzt sind, daß sich wenigstens zwei Verankerungsnuten (5', 5'') mit ihren Nutöffnungen (7) gegenüberliegen, dadurch gekennzeichnet, daß sie als vollständig in dem von den beiden sich gegenüberliegenden Verankerungsnuten (5', 5'') gemeinsam begrenzten Nutenraum (16) positionierbares Spannelement (18) ausgebildet ist, das über zwei in Längsrichtung (22) beabstandete und über eine Beaufschlagungseinrichtung (32) verbundene Übertragungskörper (23, 24) verfügt, die jeweils unter Durchquerung der fluchtenden Nutöffnungen (7) gleichzeitig in die Verankerungsabschnitte (8) beider Verankerungsnuten (5', 5") eingreifen, wobei zwischen den beiden Übertragungskörpern (23, 24) zwei jeweils in einen der Verankerungsabschnitte (8) eingreifende, in Querrichtung (31) bewegbare Spannkörper (28, 28') angeordnet sind, die jeweils über derart gestaltete Kraftumlenkungsflächen (33, 34) mit den Übertragungskörpern (23, 24) zusammenwirken, daß sie bei durch die Beaufschlagungseinrichtung (32) im Sinne einer gegenseitigen Annäherung erfolgender Beaufschlagung der Übertragungskörper (23, 24) gegen die Abstützfläche (13) des zugeordneten Verankerungsabschnittes (8) vorgespannt werden und zwischen ihnen liegende, eine jeweilige Nutöffnung (7) längsseits flankierende Profilteilabschnitte (11) der beiden Profilteile (1, 2) zusammenspannen.

2. Verbindungseinrichtung nach Anspruch 1, dadurch gekennzeichnet, daß die aneinander anliegenden Kraftumlenkungsflächen (33, 34) derart ausgebildet sind, daß sie bei durch die Beaufschlagungseinrichtung (32) erfolgender Beaufschlagung der Übertragungskörper (23, 24) aneinander abgleiten können.

3. Verbindungseinrichtung nach Anspruch 1 oder 2, dadurch gekennzeichnet, daß ein jeweiliger Spannkörper (28, 28') über zwei jeweils einem Übertragungskörper (23, 24) zugewandte erste Kraftumlenkungsflächen (33) verfügt, an denen jeweils eine am benachbarten Übertragungskörper (23, 24) vorgesehene zweite Kraftumlenkungsfläche (34) anliegt, wobei die beiden ersten Kraftumlenkungsflächen (33) eines jeweiligen Spannkörpers (28, 28') und/oder die einem jeweiligen Spannkörper (28, 28') zugewandten zweiten Kraftübertragungsflächen der beiden Übertragungskörper (23, 24) in Querrichtung (31) parallel zur Tiefenrichtung der betreffenden Verankerungsnut (5', 5'') zu deren Nutöffnung (7) hin auseinanderlaufen.

4. Verbindungseinrichtung nach Anspruch 3, dadurch gekennzeichnet, daß die Kraftumlenkungsflächen (33, 34) von Schrägflächen gebildet sind.

5. Verbindungseinrichtung nach einem der Ansprüche 1 bis 4, dadurch gekennzeichnet, daß die Beaufschlagungseinrichtung (32) wenigstens ein sich insbesondere parallel zu den Verankerungsnuten (5', 5") zwischen den beiden Übertragungskörpern (23, 24) erstreckendes zugankerartiges Beaufschlagungselement (36, 37) aufweist.

6. Verbindungseinrichtung nach Anspruch 5, dadurch gekennzeichnet, daß zwei zugankerartige Beaufschlagungselemente (36, 37) vorgesehen sind, die jeweils an den in Gebrauchsposition des Spannelementes (18) innerhalb eines Verankerungsabschnittes (8) liegenden Übertragungspartien (25, 25'; 26, 26') der Übertragungskörper (23, 24) angreifen.

7. Verbindungseinrichtung nach Anspruch 6, dadurch gekennzeichnet, daß ein jeweiliges Beaufschlagungselement (36, 37) den zugeordneten Spannkörper (28, 28') unter Belassung eines für dessen Spannbewegung ausreichenden Querbewegungsspiels in Längsrichtung (22) durchsetzt.

8. Verbindungseinrichtung nach Anspruch 7, dadurch gekennenzeichnet, daß die Spannkörper (28, 28') eine U-ähnliche Querschnittsgestalt aufweisen und über eine vom zugeordneten Beaufschlagungselement (36, 37) durchsetzte nutartige Vertiefung (47) verfügen, wobei an den die nutartige Vertiefung (47) flankierenden Randabschnitten des Spannkörpers (28, 28') Spannflächen (48) vorgesehen sind, die mit beidseits der Nutöffnung (7) der Verankerungsnut (5', 5") vorgesehenen Abstützflächen (13) zusammenarbeiten.

9. Verbindungseinrichtung nach einem der Ansprüche 5 bis 8, dadurch gekennzeichnet, daß ein jeweiliges Beaufschlagungselement (36, 37) von einer insbesondere als Innenmehrkantschraube ausgebildeten Schraube gebildet ist.

10. Verbindungseinrichtung nach einem der Ansprüche 1 bis 9, dadurch gekennzeichnet, daß an den Spannkörpern (28, 28') in Längsrichtung (22) verlaufende, insbesondere rippenartige Zentriervorsprünge (52) vorgesehen sind, die ausgehend vom Verankerungsabschnitt (8) in die Nutöffnung (7) eingreifen und mit den Flanken der Nutöffnung (7) zusammenarbeiten.

11. Verbindungseinrichtung nach einem der Ansprüche 1 bis 10, dadurch gekennzeichnet, daß ein jeweiliger Übertragungskörper (23, 24) die Nutöffnungen (7) mit einem Verbindungssteg (27) durchsetzt, dessen Breite zumindest im wesentlichen der Breite der jeweiligen Nutöffnungen (7) entspricht.

12. Verbindungseinrichtung nach einem der Ansprüche 1 bis 11, dadurch gekennzeichnet, daß ein jeweiliger Übertragungskörper (23, 24) an seinen in Gebrauchsposition des Spannelementes (18) in den beiden Verankerungsabschnitten (8) liegenden Übertragungspartien (25, 25'; 26, 26') über seitliche Stützvorsprünge (53) verfügt, welche die die Nutöffnung (7) längsseits flankierenden Profilteilabschnitte (11) innerhalb der Verankerungsabschnitte (8) hintergreifen.

13. Verbindungseinrichtung nach einem der Ansprüche 1 bis 12, dadurch gekennzeichnet, daß die in Gebrauchsposition des Spannelementes (18) innerhalb der beiden Verankerungsabschnitte (8) liegenden Übertragungspartien (25, 25'; 26, 26') eines jeweiligen Übertragungskörpers (23, 24) eine größere Breite besitzen, als der sich zwischen den Übertragungspartien (25, 25'; 26, 26') durch die Nutöffnungen (7) hindurch erstreckende Verbindungssteg (27) des jeweiligen Übertragungskörpers (23, 24).

14. Verbindungseinrichtung nach einem der Ansprüche 1 bis 13, dadurch gekennzeichnet, daß die beiden Übertragungskörper (23, 24) jeweils als einstückige Bauteile ausgeführt sind.

## Claims

1. Connection device for the connection of two sections (1, 2), each having at least one anchorage slot (5, 5', 5") with a slot opening (7) open towards a locating surface (14), and a wider anchorage section (8) adjoining the slot opening (7) and with at least one support surface (13) facing the slot base (12), and which are placed together with facing locating surfaces (14) in such a way that the slot openings (7) of at least two anchorage slots (5', 5") are opposite one another, characterized in that it is designed as a clamping element (18) which can be fully positioned in the slot space (16) jointly bounded by the two opposite anchorage slots (5', 5") and which has two transmission elements (23, 24), spaced apart in the longitudinal direction (22) and connected via a pressure-loading device (32), each crossing the flush slot openings (7) while simultaneously engaging in the anchorage sections (8) of the two anchorage slots (5', 5"), wherein two clamping bodies (28, 28') capable of movement in the transverse direction (31) are mounted between the two transmission elements (23, 24), each engaging in one of the anchorage sections (8) and working in conjunction with the transmission elements (23, 24) via force deflection surfaces (33, 34) so designed that, under pressure-loading of the transmission elements (23, 24) by the pressure-loading device (32) to bring them closer together, they are prestressed against the support surface (13) of the assigned anchorage section (8), and clamp together sub-sections (11) - lying between them - of the two sections (1, 2) flanking the long side of each slot opening (7).

2. Connection device according to claim 1, characterized in that the force deflection surfaces (33, 34) in contact with one another are so designed that they can slide along one another when pressure is applied to the transmission elements (23, 24) by the pressure-loading device (32).

3. Connection device according to claim 1 or 2, characterized in that each clamping body (28, 28') has two first force deflection surfaces (33), each facing a transmission element (23, 24) and each in contact with a second force deflection surface (34) provided on adjacent transmission elements (23, 24), wherein the two first force deflection surfaces (33) of each clamping body (28, 28') and/or the second force deflection surfaces of the two transmission elements (23, 24) assigned to a particular clamping body (28, 28') diverge in the transverse direction (31) parallel to the vertical direction of the anchorage slot (5', 5") concerned, towards its slot opening (7).

4. Connection device according to claim 3, characterized in that the force deflection surfaces (33, 34) are formed by inclined surfaces.

5. Connection device according to any of claims 1 to 4, characterized in that the pressure-loading device (32) has one or more pressure-loading elements like a tie bolt (36, 37), extending in particular parallel to the anchorage slots (5', 5") between the two transmission elements (23, 24).

6. Connection device according to claim 5, characterized in that two pressure-loading elements like a tie bolt (36, 37) are provided, each acting on the transmission sections (25, 25'; 26, 26') of the transmission elements (23, 24) which lie within an anchorage section (8) in the position of use of the clamping element (18).

7. Connection device according to claim 6, characterized in that each pressure-loading element (36, 37) passes through the assigned clamping body (28, 28') in the longitudinal direction (22), leaving adequate transverse movement play for its clamping movement.

8. Connection device according to claim 7, characterized in that the clamping bodies (28, 28') have U-shaped cross-sections and are provided with a slot-like recess (47) through which the assigned pressure-loading element (36, 37) passes, while provided on the edge sections of the clamping body (28, 28') flanking the slot-like recess (47) are clamping surfaces (48) which work in conjunction with support surfaces (13) provided on either side of the slot opening (7) of the anchorage slot (5', 5").

9. Connection device according to any of claims 5 to 8, characterized in that each pressure-loading element (36, 37) is formed by a screw, in particular in the form of a polygon socket screw.

10. Connection device according to any of claims 1 to 9, characterized in that the clamping bodies (28, 28') are provided with centring projections (52), in particular rib-shaped, running in the longitudinal direction (22) and which, starting from the anchorage section (8), engage in the slot opening (7) and operate in conjunction with the sides of the slot opening (7).

11. Connection device according to any of claims 1 to 10, characterized in that each transmission element (23, 24) passes through the slot openings (7) with a connecting web (27), the width of which corresponds substantially to the width of the slot opening (7) concerned.

12. Connection device according to any of claims 1 to 11, characterized in that each transmission element (23, 24) has in the position of use of the clamping element (18), on the transmission sections (25, 25'; 26, 26') lying in the two anchorage sections (8), side support projections (53) which engage behind the sub-sections (11) flanking the long side of the slot opening (7) within the anchorage sections (8).

13. Connection device according to any of claims 1 to 12, characterized in that the transmission sections (25, 25'; 26, 26') of each transmission element (23, 24) lying within the two anchorage sections (8) in he position of use of the clamping element (18) have a width which exceeds that of the connecting web (27) of the respective transmission element (23, 24) extending between the transmission sections (25, 25'; 26, 26') through the slot openings (7).

14. Connection device according to any of claims 1 to 13, characterized in that each of the two transmission elements (23, 24) is designed as a one-piece component.

## Revendications

1. Dispositif d'assemblage destiné à assembler deux éléments profilés (1,2), qui présentent chacun au moins une rainure d'ancrage (5, 5', 5") avec une ouverture de rainure (7) ouverte vers une surface de contact (14), ainsi qu'une portion d'ancrage (8) plus large, se raccordant à l'ouverture de rainure (7), avec au moins une surface d'appui (13) dirigée vers le fond de rainure (12) et qui sont placés l'un contre l'autre avec leurs surfaces de contact (14) tournées l'une vers l'autre de manière qu'au moins deux rainures d'ancrage (5', 5") se trouvent en vis-à-vis avec leurs ouvertures de rainure (7), caractérisé en ce qu'il est réalisé en tant qu'élément de serrage (18) positionnable entièrement dans l'espace (16) des rainures délimitées conjointement par les deux rainures d'ancrage (5', 5") se faisant face, élément de serrage qui dispose de deux corps de transmission (23, 24) espacés dans la direction longitudinale (22) et reliés par l'intermédiaire d'un dispositif d'actionnement (32), lesquels s'engagent chacun simultanément dans les portions d'ancrage (8) des rainures d'ancrage (5, 5"), en traversant les ouvertures de rainure (7) alignées, tandis qu'entre les deux corps de transmission (23, 24) sont disposés des corps de serrage (28, 28') déplaçables dans la direction transversale (31), s'engageant chacun dans l'une des portions d'ancrage (8), lesquels corps de serrage coopèrent avec les corps de transmission (23, 24) respectivement par des surfaces de renvoi de force (33, 34) conçues de manière qu'elles soient précontraintes lorsque les corps de transmission (23, 24), sous l'effet du dispositif d'actionnement (32), sont sollicités, dans le sens d'un rapprochement réciproque, contre la surface d'appui (13) de la portion d'ancrage (8) correspondante, et de manière à serrer ensemble des portions d'éléments profilés (11) des deux éléments profilés (1, 2), se trouvant entre elles, qui suivent longitudinalement une ouverture de rainure (7) respective.

2. Dispositif d'assemblage selon la revendication 1, caractérisé en ce que les surfaces de renvoi de force (33, 34) s'appliquant l'une contre l'autre sont formées de manière à pouvoir glisser l'une contre l'autre lors de la sollicitation des corps de transmission (23, 24), se produisant sous l'effet du dispositif d'actionnement (32).

3. Dispositif d'assemblage selon la revendication 1 ou 2, caractérisé en ce que chaque corps de serrage (28, 28') dispose de deux premières surfaces de renvoi de force (33) tournées chacune vers un corps de transmission (23, 24), contre chacune desquelles s'applique une deuxième surface de renvoi de force (34) prévue sur le corps de transmission (23, 24) voisin, les deux premières surfaces de renvoi de force (33) de chaque corps de serrage (28, 28') et/ou les deuxièmes surfaces de transmission de force des deux corps de transmission (23, 24), tournées vers un corps de serrage (28, 28') respectif, s'éloignant l'une de l'autre dans la direction transversale (31), parallèlement à la direction de la profondeur de la rainure d'ancrage (5', 5") concernée, vers son ouverture de rainure (7).

4. Dispositif d'assemblage selon la revendication 3, caractérisé en ce que les surfaces de renvoi de force (33, 34) sont formées par des surfaces obliques.

5. Dispositif d'assemblage selon l'une des revendications 1 à 4, caractérisé en ce que le dispositif d'actionnement (32) comporte au moins un élément d'actionnement (36, 37) du genre tirant s'étendant en particulier parallèlement aux rainures d'ancrage (5', 5"), entre les deux corps de transmission (23, 24).

6. Dispositif d'assemblage selon la revendication 5, caractérisé en ce que sont prévus deux éléments d'actionnement (36, 37) du genre tirant, qui agissent chacun sur les parties de transmission (25, 25'; 26, 26') des corps d'application (23, 24), se trouvant, en position d'utilisation de l'élément de serrage (18), à l'intérieur d'une portion d'ancrage (8).

7. Dispositif d'assemblage selon la revendication 6, caractérisé en ce que chaque élément d'actionnement (36, 37) traverse le corps de serrage (28, 28') correspondant, en ménageant un jeu de déplacement transversal dans la direction longitudinale (22), suffisant pour son mouvement de serrage.

8. Dispositif d'assemblage selon la revendication 7, caractérisé en ce que les corps de serrage (28, 28') présentent une forme de section transversale à la manière d'un U et disposent d'un renfoncement (47) du genre rainure traversé par l'élément d'actionnement (36, 37) correspondant, tandis que sur les portions de bordure du corps de serrage (28, 28'), suivant le renfoncement (47) du genre rainure, sont prévues des surfaces de serrage (48), qui coopèrent avec des surfaces d'appui (13) prévues des deux côtés de l'ouverture de rainure (7) de la rainure d'ancrage (5', 5").

9. Dispositif d'assemblage selon l'une des revendications 5 à 8, caractérisé en ce que chaque élément d'actionnement (36, 37) est formé par une vis réalisée en particulier en tant que vis polygonale à pans creux.

10. Dispositif d'assemblage selon l'une des revendications 1 à 9, caractérisé en ce que sur les corps de serrage (28, 28') sont prévues des saillies de centrage (52), en particulier du genre nervures, s'étendant dans la direction longitudinale (22), qui partant de la portion d'ancrage (8) s'engagent dans l'ouverture de rainure (7) et coopèrent avec les flancs de l'ouverture de rainure (7).

11. Dispositif d'assemblage selon l'une des revendications 1 à 10, caractérisé en ce que chaque corps de transmission (23, 24) traverse les ouvertures de rainure (7) par une entretoise de liaison (27), dont la largeur correspond au moins sensiblement à la largeur des ouvertures de rainure (7) respectives.

12. Dispositif d'assemblage selon l'une des revendications 1 à 11, caractérisé en ce que chaque corps de transmission (23, 24) dispose, sur ses parties de transmission (25, 25'; 26, 26'), se trouvant, en position d'utilisation de l'élément de serrage (18), dans les deux portions d'ancrage (8), de saillies d'appui latérales (53), qui passent derrière les portions d'éléments profilés (11), suivant longitudinalement l'ouverture de rainure (7), à l'intérieur des portions d'ancrage (8).

13. Dispositif d'assemblage selon l'une des revendications 1 à 12, caractérisé en ce que les parties de transmission (25, 25'; 26, 26') de chaque corps de transmission (23, 24), se trouvant, en position d'utilisation de l'élément de serrage (18), à l'intérieur des deux portions d'ancrage (8), présentent une plus grande largeur que l'entretoise de liaison (27) de chaque corps de transmission (23, 24), s'étendant entre les parties de transmission (25, 25'; 26, 26'), à travers les ouvertures de rainure (7).

14. Dispositif d'assemblage selon l'une des revendications 1 à 13, caractérisé en ce que les deux corps de transmission (23, 24) sont réalisés chacun en tant que composants d'une seule pièce.
